# EUROPÄISCHE PATENTANMELDUNG

(11) **EP 3 851 418 A1**
(43) Veröffentlichungstag der Anmeldung: **21.07.2021**
(21) Anmeldenummer: 20191282.1
(22) Anmeldetag: 17.08.2020
(51) Int. Cl.: C02F 3/30, C02F 3/12, C02F 101/16, C02F 103/00

(54) **VERFAHREN UND SYSTEM ZUR BIOLOGISCHEN BEHANDLUNG VON HOCHKONZENTRIERTEM ABWASSER**

(30) Priorität: 17.01.2020 DE 102020101116
(71) Anmelder: Bluetector AG, 6331 Hünenberg (CH)
(72) Erfinder: Din, David, 6010 Friens (CH)
(74) Vertreter: Klemm, Rolf

(57) **Zusammenfassung**

Es wird ein Verfahren zur biologischen Behandlung von hochkonzentriertem Abwasser beschrieben, insbesondere mit extrem hoher Stickstoff- und Phosphorkonzentration, insbesondere aus landwirtschaftlicher Produktion oder aus anschlussfreien Sanitärkabinen, wobei Abwasser durch eine mindestens einstufige Feststoffabtrennvorrichtung geleitet wird, das davon getrennte Abwasser in eine biologische, flüssige Prozessumgebung geleitet wird, das Abwasser in der biologischen Prozessumgebung zumindest zu Belebtschlamm und Prozesswasser geklärt wird, das Abwasser durch eine anaerobe, anoxische und eine aerobe Prozessumgebung geleitet wird und in einer Nachklärvorrichtung nachgeklärt wird, wobei zumindest ein Teil des Belebtschlamms in die biologische Prozessumgebung zurückgeführt wird und ein Teil als Reinwasser abgeleitet wird.

## Beschreibung

### Hintergrund

Hier wird ein Verfahren und ein System zur biologischen Behandlung, insbesondere zum Nährstoffentzug, von hochkonzentriertem Abwasser, insbesondere mit extrem hoher Stickstoff- und Phosphorkonzentration, insbesondere aus landwirtschaftlicher Produktion, Gärresten oder aus anschlussfreien Sanitärkabinen beschrieben.

### Stand der Technik

Hochkonzentriertes Abwasser aus anschlussfreien Sanitärkabinen weist folgende Charakteristika auf. Es hat einen hohen Anteil an Feststoffen, darunter auch grobe Feststoffe wie Glas, Metall, Steine und/oder Textilien.

Hochkonzentriertes Abwasser hat eine extrem hohe Konzentration von Stickstoff, durchschnittlich 2'000 - 4'000 mg/l. Dieser Wert ist ca. 40-80x höher als der gewöhnliche Zulauf von Abwasser in eine kommunale Kläranlage. Solche hohen Stickstoffwerte sind normalerweise toxisch für eine biologische, kommunale Abwasserbehandlung. Sie setzen den normale Klärungsprozess einer kommunalen Kläranlage außer Kraft. Deshalb ist es, insbesondere häufig, verboten derartig hochkonzentriertes Abwasser ungeklärt an eine kommunale Kläranlage abzugeben. Kommunale Kläranlagen nehmen in der Regel deshalb solch hochkonzentriertes Abwasser überhaupt gar nicht an.

Ferner weist hochkonzentriertes Abwasser eine sehr hohe Konzentration von Phosphor und Kalium sowie starke Biozide auf, welche eine signifikant hemmende Wirkung auf die biologische Behandlung haben. Das hochkonzentrierte Abwasser hat einen durchschnittlich extrem hohen, basischen pH-Wert von ca. 8.5 - 9.0, mit einer sehr hohen Säurekapazität, was die Senkung des pH-Wertes ebenfalls erschwert. Bei solch hohen pH-Werten ist eine biologisch Abwasserbehandlung stark erschwert bis unmöglich.

Es sind verschiedene Verfahren und Systeme bekannt, um Abwasser mit einem biologischen Nährstoffentzug durch Denitrifikation und Nitrifikation und anschließender Feststofftrennung zu behandeln.

Es ist bekannt in der Landwirtschaft mit einer sehr großen Tierhaltung, die Gülle am Ort der Entstehung zu Prozess- und Klarwasser biologisch zu behandeln, da ein Transport in Regionen, die Gülle aufnehmen würden, aufwändiger und kostenintensiver ist.

### Zu lösendes Problem

Aufgabe ist es, ein Verfahren und ein System zur biologischen Behandlung, insbesondere zum Nährstoffentzug von, insbesondere hochkonzentriertem, Abwasser aus landwirtschaftlicher Produktion, Gärresten oder aus anschlussfreien Sanitärkabinen der Eingangs bezeichneten Art bereitzustellen, die eine effektive biologische Klärung des Abwassers ermöglichen.

### Lösung, Vorteile und Ausgestaltung

Es wird hier ein Verfahren zur biologischen Behandlung von hochkonzentriertem Abwasser beschrieben, insbesondere mit extrem hoher Stickstoff- und Phosphorkonzentration, insbesondere aus landwirtschaftlicher Produktion oder aus anschlussfreien Sanitärkabinen, wobei Abwasser durch mindestens eine einstufige Feststoffabtrennvorrichtung geleitet wird, das davon getrennte Abwasser in eine biologische, flüssige Prozessumgebung geleitet wird, das Abwasser in der biologischen Prozessumgebung behandelt wird, wobei das Abwasser durch eine anaerobe, anoxische und eine aerobe Prozessumgebung geleitet wird und in einer Nachklärvorrichtung nachgeklärt wird, wobei zumindest ein Teil des Belebtschlamms in die biologische Prozessumgebung zurückgeführt wird und ein Teil als Prozesswasser abgeleitet wird.

Die anaerobe Prozessumgebung führt zu einer Hydrolyse. Ein rezirkulierender Belebtschlamm fördert die Hydrolyse. Die Hydrolyse spaltet Produkte, wie kurzkettige, gelöste Substanzen, wie Zucker, Alkohol und organische Säuren auf. Chemisch betrachtet ist ein anaerobes Milieu frei von molekularem Sauerstoff. Somit ist gelöster Sauerstoff nicht vorhanden. Organismen benötigen für ihren Stoffwechsel keinen freien Sauerstoff. Für stark verschmutzte Abwasser wird die anaerobe Reinigung eingesetzt, insbesondere aus Gründen der Energieeinsparung. In einem anaeroben Faulungsprozess entsteht ein Biogas, eine Mischung aus Methan und Kohlendioxid und einer geringen Menge Restgas, das unter Umständen zum Heizen verwendet werden kann.

In einer anoxischen Prozessumgebung liegt chemisch gebundener Sauerstoff z.B. in Form von Nitraten für eine Denitrifikation vor. Die Denitrifikation beschreibt einen Vorgang zum Abbau von Nitrat zu molekularem Stickstoff durch spezielle Mikroorganismen. Aufgrund von Redox-Potentialen reicht ein oder nur begrenzt gelöster Sauerstoff aus. Mikroorgansimen reduzieren selektiv Nitrat durch enzymatische Aktivitäten zu molekularem Stickstoff in anoxischen Umgebungsbedingungen. In anoxischer Umgebung ist also kein frei gelöster Sauerstoff vorhanden.

Durch die Denitrifikation werden anorganische Verbindungen durch einen biologischen Prozess zu Stickstoffgas umgesetzt und wieder in den Stickstoffkreislauf der Atmosphäre zurückgeführt.

In einer aeroben Prozessumgebung ist der Sauerstoff gelöst vorhanden. Hier wird Belebtschlamm erzeugt. Beim Belebtschlammverfahren wird die organische Belastung in gelöster Form durch aerobe Mikroorganismen abgebaut. Die Mikroorganismen umfassen Bakterien, einzellige, zum Teil mehrzellige Algen, Pilze, Hefen, Protozoen. Für eine aerobe Prozessumgebung wird das Belebungsbecken ausgiebig belüftet. In allen drei Becken und Behältern wird das Abwasser bevorzugt mit Rotoren oder Rührwerken insbesondere in horizontaler Richtung angeordnet bewegt, um Belebtschlamm in Suspension zu halten. In einem Nachklärbecken wird durch Sedimentation gereinigtes Prozesswasser abgeleitet. Schlamm vom Boden des Nachklärbeckens wird zur biologischen Prozessumgebung als Belebtschlamm rezirkuliert. Überschussschlamm wird zur Feststoffabtrennvorrichtung abgeführt.

Vorteile sind eine vollständige bzw. nahezu vollständige Nitrifikation und es sind keine zusätzlichen Flockungs- bzw. Fällungsmittel erforderlich.

Durch die Rezirkulation, insbesondere des Belebtschlammes, wird das Abwasser abwechselnd den mindestens drei biologischen Prozessumgebungen unterworfen, bis gereinigtes Prozesswasser ableitbar ist.

Somit ist das Verfahren und ein entsprechendes System mit Vorrichtungen für landwirtschaftliche Betriebe, Gärreste oder für Sammelstellen von hochkonzentriertem Abwasser aus anschlussfreien Sanitärkabinen kompakt realisierbar.

Gemäß eines weiterbevorzugten Verfahrens, wird ein Teil des Belebtschlamms in die anaerobe Prozessumgebung rezirkuliert. Somit verbessern sich die Abbaubedingungen mittels anaerober Organismen, die ohne freien Sauerstoff leben und die Energie ohne Anwesenheit von Sauerstoff durch unvollständige Abbauvorgänge gewinnen.

Um den anoxischen Prozessablauf weiter zu verbessern, wird ein Teil des Belebtschlamms aus der Nachklärvorichtung in die anoxische Prozessumgebung rezirkuliert. Die anoxische Prozessumgebung dient der Denitrifikation als auch für Anammox. Anammox ist eine anaerobe Ammoniumoxidation ohne Sauerstoff. Ammonium NH4+ mit Sauerstoff O2 und Nitrit NO2- wird in der anaeroben und in der anoxischen Prozessumgebung zu Stickstoff N2 und Nitrat NO3- in einem Anammoxprozess oxidiert. Dabei wird Ammonium NH₄⁺ mit Nitrit NO₂⁻ unter anaeroben Bedingungen zu molekularem Stickstoff N₂ und Wasser 2 H₂O in einer Redox-Reaktion komproportioniert. Die anaerobe Ammonium-Oxidation wird durch spezifische Bakterien wie Candidatus Brocadia Anammoxidans oder auch Bakterien wie Kuenenia stuttgartiensis und Scalindua sorokinii initiiert. Ebenso ist es bekannt, dass Candidatus Methanoperedens nitroreducens - eine Archaee aus der Ordnung der Methanosarcinales - eine anaerobe Methanoxidation ausführt. Zwei Mikroorganismen können somit Ammonium, Methan und Nitrat aus dem Abwasser in elementaren, molekularen Stickstoff und Kohlendioxid umwandeln. Brocadia Anammoxidans benötigt keinen Sauerstoff und verbraucht noch dazu das Treibhausgas Kohlendioxid. Aufgrund des entfallenden Energieaufwands zur Belüftung wird erhebliche Energie eingespart von ca. 10%, sowie eine Reduzierung des Ausstoßes von Kohlendioxid von bis zu 90%. Es wäre auch eine Ammoniumoxidation mit Hilfe von Anoden als bioelektrisches System zur Realisierung einer Mikrobiologischen Brennstoffzelle möglich. Bei der Nitrifikation wird in einer bakteriellen Oxidation aus Ammoniak oder Ammoniumionen in zwei Teilprozessen Nitrat NO₃⁻.

2 NH₃ + 3 0₂ -> 2NO₂⁻ + 2H⁺ + 2 H₂O

Bevorzugt wird ein Teil des Belebtschlamms aus der biologischen Prozessumgebung über die Nachklärvorrichtung in den Vorlagebehälter rezirkuliert. Somit wird der Prozess der Hydrolyse und Versäuerung des Abwassers gefördert und der Vorlagebehälter kann gleichzeitig als anaerobes Becken benutzt werden. Somit sind auch anaerobe Behälter einsparbar.

Um hochkonzentriertes Abwasser in einer biologischen Umgebung effizient zu behandeln, wird das Abwasser in der biologischen Prozessumgebung in Chargen geklärt.

Um die Behandlung von hochkonzentriertem Abwasser zu fördern und zu verbessern, wird die biologische Behandlung durch eine Bioaugmentation, insbesondere mittels einer steuerbaren Bioaugmentationsvorrichtung, mit spezifischen, definierten Mikroorganismen unterstützt, die im aeroben Tank bei einem Sauerstoffgehalt von ca. 0.5% nitrifizieren, die in den Prozess in den Vorlagebehälter, in die anaerobe, anoxische Prozessumgebung und insbesondere in die Nachklärvorrichtung zur Nachklärung direkt hinzudosiert wird. Somit ist ein Flockungsmittel nicht mehr notwendig. Unter Bioaugmentation ist das Einbringen von Mikroorganismen zu verstehen, um eine Bakterien- und Organismenkultur zu schaffen. Die Organismenkultur behandelt effizienter hochkonzentriertes Abwasser. Eine Bioaugmentation wird kontinuierlich fortgeführt, da sich die Mikroorganismen nicht, insbesondere nicht ausreichend genug, von selbst vermehren.

Um gereinigtes Prozesswasser effizient zu gewinnen, wird das Abwasser mittels Membranfiltration nachgeklärt, wobei die Nachklärvorrichtung als Membranfiltrationsvorrichtung ausgebildet ist.

Um weniger Chemikalien einsetzen zu müssen, und Fällungsmittel zu vermeiden, wird bevorzugt Überschussschlamm aus der biologischen Prozessumgebung, aus der Nachklärvorrichtung, insbesondere nach Rezirkulieren mit der einstufigen Feststoffabtrennvorrichtung, insbesondere mit einem hohen Anteil an Phosphor, entfernt. Ferner sind aufgrund der spezifischen biologischen Bakterien keine Chemikalien plus Fällungsmittel notwendig.

In einem bevorzugten alternativen Verfahren wird das Abwasser in der biologischen Prozessumgebung in mindestens einem Becken oder Behälter, insbesondere in einem Durchlaufkanal zur Denitrifikation und Nitrifikation abwechslungsweise durchgeführt. Insbesondere wird mit mindestens zwei Becken nacheinander das Abwasser, mit einem ersten anoxischen Becken und einem zweiten aeroben Becken, geklärt, insbesondere mit einem ersten anoxische Beckenabschnitt und einem zweiten aeroben Beckenabschnitt oder wird das Abwasser im Behälter intermittierend anoxisch und aerob behandelt. Ein Endloskanal mit einer Endlos-Schleife hat den Vorteil, dass schneller Prozesse der Denitrifikation und Nitrifikation auf das Abwasser zur Behandlung einwirken.

Um das Verfahren und das System noch kompakter auszubilden, wird der Vorlagebehälter als anaerobes Becken und als Teil der biologischen Behandlung eingesetzt.

Um hochkonzentriertes Abwasser effizient, vor allem auch in größeren Mengen zu behandeln, werden Teile von Belebtschlamm und gleiche Teile von Wasser mit Bruchteilen von hochkonzentriertem Abwasser zum Beginn einer Klärung sukzessive vermischt, und im gleichen Verhältnis werden Teile von allen vorgenannten drei Teilen, d.h. Belebtschlamm, Wasser und Bruchteile von hochkonzentriertem Abwasser, in gleichen Zeitabschnitten sukzessive beigemischt und zugeführt, und somit wird das zu klärende Volumen des Abwassers pro Zeitabschnitt sukzessive erhöht. Es wird somit eine Biologie geschaffen, mit der sukzessive das Volumen zur Behandlung des hochkonzentrierten Abwassers hochgefahren und die Anteile im Wesentlichen gleich gehalten werden, so dass das hochkonzentrierte Abwasser effizient und in größeren Zeitabschnitten mit größerem Volumen geklärt wird. Aufgrund der extrem hohen Stickstoffkonzentration des Abwassers darf jeweils nur so viel von dem Gemisch in die Biologie geleitet werden, dass während des biologischen Prozesses der pH-Wert stets in einer Spannweite von ca. 6.5- 8.0 verbleibt, da ansonsten der biologische Prozess der Nitrifikation und Denitrifikation unterbrochen wird. Der anoxische Teil der Behandlung dient vor allem zur Denitrifikation und Anammox.

Um eine zusätzliche Beigabe von Säuren und Basen zu vermeiden und somit Ressourcen einzusparen, wird gemäß eines weiterführenden, bevorzugten Verfahrens eine Balance in der biologischen Prozessumgebung, insbesondere in der anaeroben und anoxischen Prozessumgebung, zwischen einem pH-Wert von 6,0 (leicht sauer) bis 8 (leicht basisch) durch das Zusammenspiel von hochkonzentriertem, stark basischen Abwasser mit sehr hoher Säurekapazität, einem sauren Belebtschlamm und einer sauren, biologischen Prozessumgebung mit einer in der aeroben Prozessumgebung Steuerung der aeroben Luftzufuhr auf Basis des pH-Werts vom Abwasser aus der aeroben Prozessumgebung überwacht und aufrechterhalten. Das Verfahren ist somit ein in sich geschlossenes Prozesssystem.

Um eine Hydrolyse im Vorlagebehälter auszulösen und somit die nachfolgenden Behandlungsschritte zu vereinfachen, d.h. schwer abbaubare Stoffe werden durch Hydrolyse in leicht abbaubare Stoffe aufgebrochen und um auf eine zusätzliche Energiezufuhr zu vermeiden, wird weiter bevorzugt Belebtschlamm aus der Nachklärvorrichtung, insbesondere aus der biologischen Prozessumgebung in den Vorlagebehälter rezirkuliert wird.

Nach einem weiterbildenden Verfahren wird Überschussschlamm aus der biologischen aeroben Prozessumgebung und aus der Nachklärvorrichtung, insbesondere einer Membran-Vorrichtung, zur Feststoffabtrennvorrichtung zugeführt. Somit wird die Behandlung von Abwasser kompakt gehalten.

Gemäß einem weiterbildenden Verfahren wird das geklärte Prozessabwasser auf die Qualität der Klärung überprüft.

Es wird hier ein System zur biologischen Behandlung von hochkonzentriertem Abwasser beschrieben, insbesondere mit extrem hoher Stickstoff- und Phosphorkonzentration, insbesondere aus landwirtschaftlicher Produktion, von Gärresten oder aus anschlussfreien Sanitärkabinen, mit einer Feststoffabtrennvorrichtung, mit einer biologischen Prozessumgebung mit mindestens einem Behälter für eine anaerobe Prozessumgebung, mit mindestens einem Behälter für eine Denitrifikation mit einer anoxischen Prozessumgebung und für eine Nitrifikation mit einer aeroben Prozessumgebung mittels Vorrichtungen zum steuerbaren Lufteintrag sowie einer Maschinenvorrichtung umfassend Sensoren, Steuerungen, Pumpen, Zirkulationsvorrichtungen sowie Versorgungs- und Abführleitungen und einer Nachklärvorrichtung, wobei die Behälter sukzessive das Abwasser ableitend hintereinander geschaltet sind, wobei mindestens eine Rezirkulationsleitung für Belebtschlamm von der Nachklärvorrichtung zur biologischen Prozessumgebung ausgebildet ist. Somit wird biologisch effizient, hochkonzentriertes Abwasser mit einem sehr hohen Grad der Denitrifikation, Nitrifikation sowie einer Eliminierung von Stickstoff behandelt. Da die Effizienz der biologischen Prozessumgebung viel höher ist, können auch Gärreste behandelt werden, wobei Ressourcen in Form von zusätzlicher Säure und Lauge, sowie elektrische Energiezufuhr geschont werden.

Gemäß einer weiter bevorzugten Ausführungsform ist eine Rezirkulationsleitung für Belebtschlamm von der Nachklärvorrichtung zum Behälter der biologischen anoxischen Prozessumgebung ausgebildet ist. Somit kann die Balance des pH-Werts im Abwasser aus der aeroben Prozessumgebung effizienter eingestellt werden und eine hohe Reinigungsleistung erzielt werden.

Aus den gleichen Gründen ist eine Rezirkulationsleitung für Belebtschlamm von der Nachklärvorrichtung zum Behälter der biologischen anaeroben Prozessumgebung ausgebildet, wobei ein im Leitungsfluss des Abwassers liegender Vorlagebehälter für die Vorlage des zu klärenden hochkonzentrierten Abwassers nach der Feststoffabtrennvorrichtung angeordnet ist.

Um eine Hydrolyse effizient bereits im Vorlagebehälter zu aktivieren, ist weiter bevorzugt die Vorrichtung mit einer Rezirkulationsleitung für Belebtschlamm von der Nachklärvorrichtung zum Vorlagebehälter ausgebildet.

Das System ist derart ausgebildet, so dass ein oben beschriebenes Verfahren ausführbar ist.

Um eine hohe Reinigungsleistung zu erzielen, ist die Nachklärvorrichtung als Membran-Belebungs- und Filtrations-MBR-Tank ausgebildet.

Um eine Balance bezüglich des pH-Werts in der biologischen Prozessumgebung insbesondere im Abwasser aus der aeroben Prozessumgebung sowie den oben beschriebenen Prozess effizient im oben beschriebenen pH-Wert-Prozessfenster zu steuern, umfasst bevorzugt die Vorrichtung eine Speicher-Programmierbare-(SPS)-Steuerung, die mit im aeroben Behälter angeordneten Sensoren zur Online-Messung von pH-Wert, gelöstem Sauerstoffgehalt, Ammonium- und Nitratgehalt und Feststoffkonzentrationsgehalt, mit Füllstandssensoren in den Behältern und mit einer im anoxischen Behälter angeordneten Online-Redox-Messvorrichtung zur Messung des Reduktionspotentials verbunden ist, und die mit Aktoren verbunden ist, die Belebtschlamm über Rezirkulationsleitungen aus der Nachklärvorrichtung in den aeroben und /oder in den anoxischen Behälter und/oder in den Vorlagebehälter pumpen, wobei Vorrichtungen als Aktoren einen Lufteintrag mit Luftdiffusoren im aeroben Behälter steuern, und Umwälzvorrichtungen als Aktoren das Abwasser in den Behältern bewegen und Pumpen als Aktoren das Abwasser durch die einzelnen Behälter im Fluss fortleiten.

Um das System kompakt und bauraumschonend auszubilden, sind Behälter zur biologischen Prozessumgebung zylindrisch ausgebildet, wobei ein Behälter für die anaerobe Prozessumgebung zentriert ausgebildet ist und dazu konzentrisch ringförmig Behälter, insbesondere von Innen nach Außen, für eine anoxische Prozessumgebung und eine aerobe Prozessumgebung ausgebildet sind, wobei der Behälter aus Beton mit einem Deckel aus Beton ausgebildet ist, wobei der Boden der Behälter jeweils zu einem Auslass geneigt ausgebildet ist, wobei der Deckel Öffnungen zur Reinigung aufweist, wobei mindestens ein quaderförmiger Container mit Vorrichtungen zur Steuerung und Vor- und Nachklärung angeordnet ist.

Es wird ein Computerprogrammprodukt beschrieben, das in einen Speicher einer oben beschriebenen SPS-Steuerung der oben beschriebenen Vorrichtung ladbar ist und mit dem ein oben beschriebenes Verfahren zur Aufrechterhaltung einer Balance des pH-Werts zwischen 6,0 und 8,0 in der biologischen Prozessumgebung, insbesondere im Abwasser aus der aeroben Prozessumgebung, ausführbar ist. Vorteilhaft sind keine Säure und keine Laugen als Beigabe notwendig, um das Behandlungsverfahren im Ablaufprozess zu halten.

Es wird die Verwendung von Feststoff als Wirtschaftsdünger beschrieben, der aufgrund des oben beschriebenen Verfahrens in einer einstufigen Feststoffabtrennvorrichtung von dieser ausgeschieden wird.

Durch den Betrieb der Kleinkläranlage bei einem pH-Wert im Bereich 6.5 - 7.5 wird sichergestellt, dass trotz Lufteintrag keine Ammoniak-Gase in die Umwelt entweichen können.
Anammox ist ein Akronym, das sich aus den Wörtern Anaerobe Ammonium-Oxidation zusammensetzt. Die anaerobe Ammonium-Oxidation ist ein biologischer Vorgang aus dem Bereich des Stickstoffkreislaufes.
Wie die Bezeichnung schon andeutet, ist die anaerobe Ammonium-Oxidation ein Oxidationsvorgang, der ohne Sauerstoff (anaerob) abläuft. Dabei wird Ammonium (NH4+) mit Nitrit (NO2-) unter anaeroben Bedingungen zu molekularem Stickstoff (N2) synproportioniert:

NH4+ + NO2- → N2 + 2 H₂O

Unter Standardbedingungen wird dabei je Mol oxidiertes Ammonium 357,8 kJ Energie frei (ΔG0' = -357,8 kJ).

### Kurzbeschreibung der Zeichnungen

Mögliche Ausführungen werden nun anhand der beigefügten schematischen Darstellungen näher erläutert, von denen zeigen:
- Fig. 1: einen Ablauf des Verfahrens gemäß einer ersten Ausführungsvariante;
- Fig. 2.: einen Ablauf des Verfahrens gemäß der ersten Ausführungsvariante in detaillierterer Form und
- Fig. 3 bis 10: verschiedene Ansichten des erfindungsgemäßen Systems zur Ausführung des Verfahrens.

### Detaillierte Beschreibung der Zeichnungen

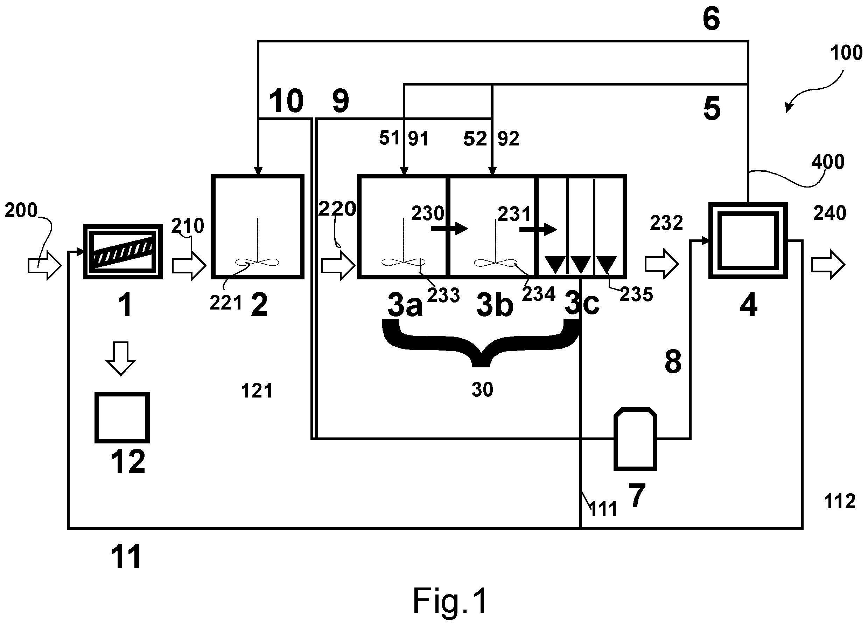

Die Fig. 1 zeigt schematisch ein System 100 und ein Verfahren zur biologischen Behandlung von Abwasser 200 mit extrem hoher Stickstoff- und Phosphorkonzentration, insbesondere Abwasser 200 aus landwirtschaftlicher Produktion, wie beispielsweise Gülle und Gärreste oder Abwasser 200 aus anschlusslosen Toilettenkabinen.

Hochkonzentriertes Abwasser 200 wird automatisiert durch Prozessschritte geleitet und anfangs mindestens einer ein-stufigen Feststoffabtrennvorrichtung 1 zugeführt. Grobe Feststoffe und ein Teil der feineren Feststoffe werden somit zurückgehalten, um ein Blockieren von nachfolgenden Pumpen und Rohrleitungen zu verhindern. Zu viele feine Feststoffe beeinträchtigen den Sauerstoffeintrag in der Biologie. Hier wird das hochkonzentrierte Abwasser in Feststoffe 12 für die Landwirtschaft oder für eine Verbrennung herausgetrennt und das flüssige hochkonzentrierte Abwasser 210 in einen Vorlagebehälter 2 zugeführt und dort zwischengespeichert. Der Vorlagebehälter 2 umfasst eine Umwälzvorrichtung 221, um das hochkonzentrierte Abwasser 210 im Prozess zu unterstützen und durchzumischen. Die Umwälzvorrichtung 221 ist also ein Rührwerk. In dem Vorlagebehälter 2 können bereits Vorgänge einer anaeroben Klärung unterstützend aktiviert werden, die durch Zuführung von Belebtschlamm 400 aus einer Nachklärvorrichtung 4 über eine Rezirkulationsleitung 6 das Verfahren fördern ausgelöst wird. Um das hochkonzentrierte Abwasser 220 unter anaeroben Mikroorganismen zu klären, wird bevorzugt dies in zwei verschiedenen Prozessreaktoren durchgeführt.

Das anaerobe Verfahren läuft in vier Phasen ab. Die erste Phase ist eine Hydrolyse, in der langkettige, oft ungelöste Stoffe, wie Eiweiße, Fette und Kohlenhydrate in Bruchstücke wie Aminosäuren, Fettsäuren und Zucker gelöst und umgewandelt werden. In einer zweiten Phase wandeln Säure bildende Mikroorganismen, die hydrolysierten Stoffe in kurzkettige Organische Säuren, z.B. Buttersäure, Propionsäure und Essigsäure um. In geringen Mengen kann Wasserstoff und Kohlendioxid entstehen. Die Parameter sind hierfür ein Temperaturbereich zwischen 25° und 35°, wobei ein pH-Wert zwischen 5,2 und 6,3 erzeugt wird. Die dritte und vierte Phase wird bevorzugt in einem weiteren Behälter 3a von einer biologischen Prozessumgebung 30. Hierfür fließt das nun versauerte Abwasser 220 in den Behälter 3a für die anaerobe Prozessumgebung. In dieser anaeroben Prozessumgebung können verstärkt neben den Prozessen der ersten und zweiten Phase, die dritte und vierte Phase selbstständig ablaufen. In der dritten Phase erfolgt eine Essigsäurebildung aus den vorgebildeten Säuren und Alkoholen. Dann entstehen in einer vierten Phase aus Methan Bakterien, die beispielsweise durch den Belebtschlamm 400 aus der Nachklärvorrichtung 4 über eine Rezirkulationsleitung 51 in den Behälter 3a für die anaerobe Prozessumgebung zugeleitet werden. Darauffolgend produzieren Methanbakterien aus Wasserstoff, Kohlendioxid und Essigsäure Methan.

Es versteht sich, dass alle vier Phasen in einem einzigen Behälter 3a als Reaktor ablaufen können. Aufgrund der unterschiedlichen Umgebungsbedingungen bezüglich pH-Wert und Temperatur, nämlich der ersten und zweiten bzw. dritten und vierten Phase bei einem pH-Wert zwischen 6,7 und 7,5 und einer höheren Temperatur zwischen 35° und 60° ist es zur Verbesserung der Abbauleistung vorteilhaft, wenn diese in zwei verschiedenen Behältern, beispielsweise 2,3 ablaufen. Ein Rührwerk bzw. eine Umwälzvorrichtung 233 sorgt für eine homogene Durchmischung des hochkonzentrierten Abwassers 230 für deren anaerobe Prozessvorgänge.

Bevorzugt wird das hochkonzentrierte Abwasser 230 aus der biologisch anaeroben Prozessumgebung in die anoxische Prozessumgebung 3b übergeführt. Durch eine weitere Zugabe von Belebtschlamm 400 über eine Rezirkulationsleitung 52 von der Nachklärvorrichtung 4 wird ein anoxisches Verfahren durchlaufen, d.h. es findet eine Denitrifikation und ein Anammox-Prozess statt, in dem aus Nitrat NO3- und gebundenem Sauerstoff in vier Stufen Stickstoff und Wasser erzeugt wird. Mit Metalloenzyme, Nitratreduktase und Nitritreduktase, Stickstoffmonoxidreduktase und Distickstoffmonoxidreduktase wird katalysiert. Da die einzelnen Prozessschritte der Denitrifikation positiv sind, wird Nitrat als Elektronenakzeptor (Oxidationsmittel) für Ihren oxidativen Energiestoffwechsel (oxidative Phophoreleminierung) genutzt, wenn kein oder nur begrenzt molekularer Sauerstoff verfügbar ist.

Das hochkonzentrierte Abwasser 231, das nun denitrifiziert wurde, wird über eine Leitung 1 in die aerobe Prozessumgebung 3c zugeführt. Eine Umwälzvorrichtung 234 unterstützt die Umwälzung im anoxischen Prozessbehälter 3b. Im aeroben Prozessbehälter 3c ist eine Lufteintragungsvorrichtung 235 mit Luftdifusoren zum Einpressen von Luft ausgebildet, so dass eine Nitrifikation mit Sauerstoff stattfindet.

Anschließend wird das nitrifizierte Abwasser 232 durch Leitung 2 in eine Nachklärvorrichtung 4 weitergeleitet. Über Rezirkulationsleitungen 5 mit Leitungszweigen 51 und 52 wird Abwasser in Form von Belebtschlamm 400 wieder in die biologische Prozessumgebung 30 zurückgeführt und somit mehrfach durchlaufen, bis Klarwasser aus dem Prozesswasser 240 entstanden ist, das von der Nachklärvorrichtung 4 abgeleitet wird.

Über die Leitung 6 wird Belebtschlamm 400 von der Nachklärvorrichtung 4 zum Vorlagebehälter 2 geleitet. Es versteht sich, dass Pumpen und Umwälzvorrichtungen für eine Förderung des Belebtschlamms 400 und des Abwassers 200, 210, 220, 230, 231, 232 von einer Speicher-programmierbaren SPS-Steuerung 15 mit einem Speicher 16, der in der SPS-Steuerung 15 eingebaut ist, angesteuert werden, so dass vorgegebene Verfahren nach einem bestimmten Algorithmus ausgeführt werden.

Von der Nachklärvorrichtung 4 wird Überschussschlamm 112 in die Feststoffabtrennvorrichtung 1 über eine Leitung 11 übergeführt. Die Feststoffvorrichtung 1 trennt somit Phosphor aus dem Überschussschlamm 112, der durch die biologische Prozessumgebung 30 und die Nachklärvorrichtung 4 aus dem Abwasser geklärt wurde.

Um die Behandlung von hochkonzentriertem Abwasser 200 zu verbessern, ist weiter bevorzugt eine Bioaugmentationsvorrichtung 7 vorgesehen, die über eine Leitung 8 Mikrobakterien in die Nachklärvorrichtung 4 zuführt. Über eine Leitung 9 mit Leitungszweigen 91 und 92 werden Mikrobakterien von der Bioaugmentationsvorrichtung 7 zum Behälter 3a der anaeroben Prozessumgebung und zum Behälter 3b der anoxischen Prozessumgebung zugeführt. Über eine Leitung 10 werden Mikrobakterien und Mikroorganismen von der Bioaugementationsvorrichtung 7 zum Vorlagebehälter 2 zugeführt.

Über die Leitung 111 wird Überschussschlamm aus dem Behälter 3c der aeroben Prozessumgebung zur Feststoffabtrennvorrichtung 1 zugeführt und über die Leitung 11 wird Überschussschlamm 112 aus der Nachklärvorrichtung 4 zur Feststoffabtrennvorrichtung 1 geleitet.

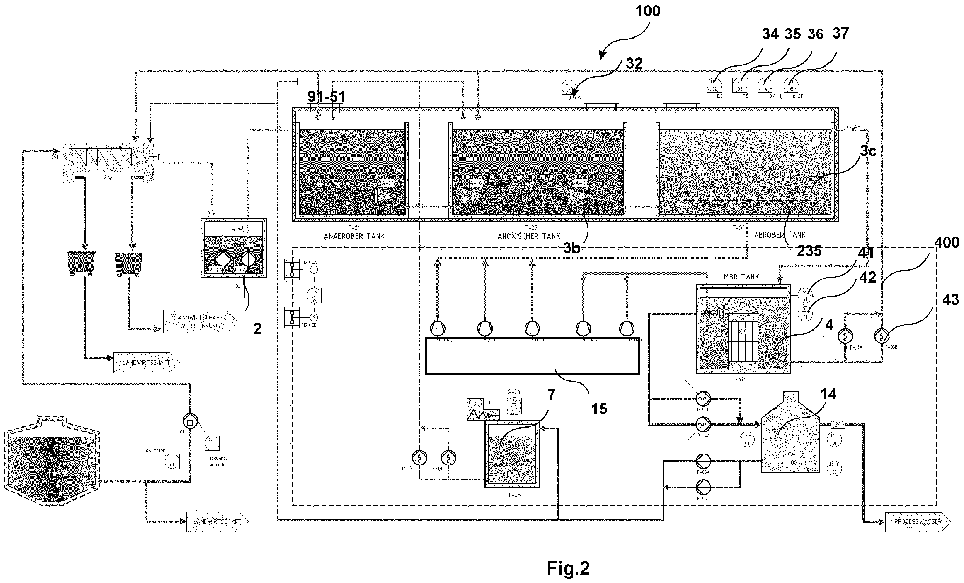

Die Fig.2 zeigt das aus der Fig.1 bekannte System 100 mit zusätzlich dargestellten, angeordneten Pumpen als Lufteintragvorrichtung 235 für den Lufteintrag sowie zur Weiterbeförderung des Abwassers 232, hier insbesondere zur Behandlung einer Gärrestbehandlungsvorrichtung.

Die Fig.2 zeigt ferner, dass im anoxischen Behälter 3b ein Redox-Sensor 32 vorgesehen ist und im aeroben Behälter 3c vier verschiedene DO (gelöster Sauerstoff, Dissolved Oxygen) Sensoren 32-37, TS-IPH/T 34 vorgesehen sind, um das Abwasser näher zu bestimmen und somit den Zulauf zum anaeroben Behälter 3a aus dem Vorlagebehälter, sowie Belebtschlamm über die Leitungszweige 51 und die Zuführung von Mikroorganismen über die Leitungszweige 91 der Bioaugmentationsvorrichtung 7 anzusteuern. Außerdem wird damit noch der Lufteintrag im aeroben Behälter 3c angesteuert. Die Sensoren 32-37 für Messvorrichtungen können auch hinter dem aeroben Behälter 3c vor der Nachklärvorrichtung 4 angeordnet sein. Die Nachklärvorrichtung 4 kann verschieden ausgestaltet sein. Hier ist die Nachklärvorrichtung 4 bevorzugt als sogenannter MBR-Tank, mit Membranfiltrationsvorrichtung ausgebildet. In dieser besonderen Ausführungsform ist ein weiterer Behälter 14 nach dem MBR-Tank für einen Sedimentation vorgesehen. Die Nachklärvorrichtung 4 umfasst zwei Füllstandssensoren 41-42 zur sukzessiven Ansteuerung der Förderpumpe.

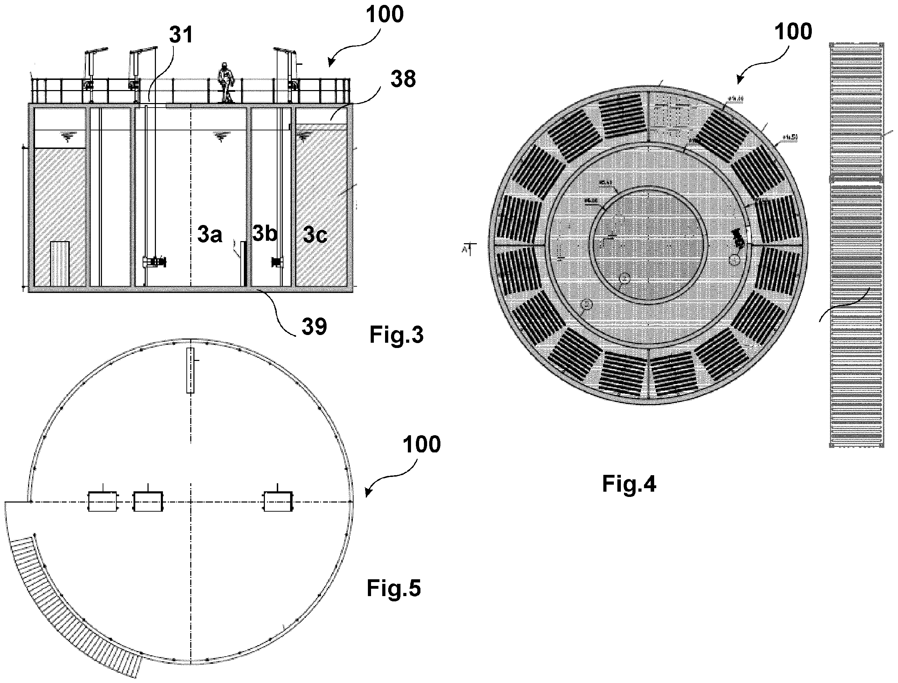

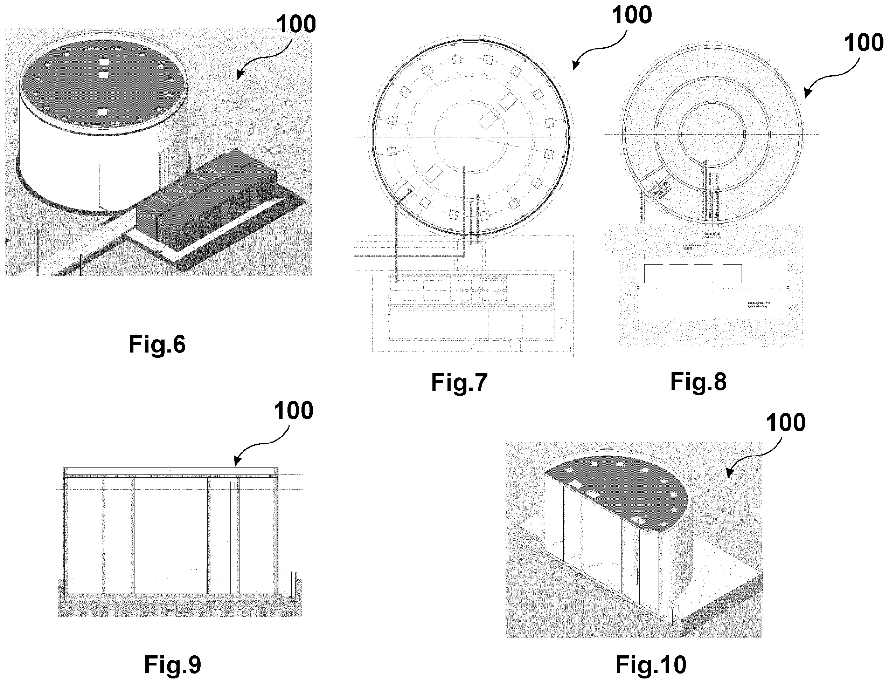

Fig. 3 bis 10 zeigen verschiedene Ansichten des erfindungsgemäßen Systems zur Ausführung des Verfahrens.

Die vorangehend beschriebenen Varianten des Verfahrens und der Vorrichtung dienen lediglich dem besseren Verständnis der Struktur, der Funktionsweise und der Eigenschaften der vorgestellten Lösung; sie schränken die Offenbarung nicht etwa auf die Ausführungsbeispiele ein. Die Fig. sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches / welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Lösung zuzuschreiben sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst.

Die vorstehend erläuterten Vorrichtungs- und Verfahrensdetails sind zwar im Zusammenhang dargestellt; es sei jedoch darauf hingewiesen, dass sie auch unabhängig voneinander sind und auch frei miteinander kombinierbar sind. Die in den Fig. gezeigten Verhältnisse der einzelnen Teile und Abschnitte hiervon zueinander und deren Abmessungen und Proportionen sind nicht einschränkend zu verstehen. Vielmehr können einzelne Abmessungen und Proportionen auch von den gezeigten abweichen.

Auch die Ansprüche limitieren nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen hier offenbart.

## Patentansprüche

1. Verfahren zur biologischen Behandlung von hochkonzentriertem Abwasser, insbesondere mit extrem hoher Stickstoff- und Phosphorkonzentration, insbesondere aus landwirtschaftlicher Produktion oder aus anschlussfreien Sanitärkabinen, wobei Abwasser durch eine mindestens einstufige Feststoffabtrennvorrichtung geleitet wird, das davon getrennte Abwasser in eine biologische, flüssige Prozessumgebung geleitet wird, das Abwasser in der biologischen Prozessumgebung zumindest zu Belebtschlamm und Prozesswasser geklärt wird, das Abwasser durch eine anaerobe, anoxische und eine aerobe Prozessumgebung geleitet wird und in einer Nachklärvorrichtung nachgeklärt wird, wobei zumindest ein Teil des Belebtschlamms in die biologische Prozessumgebung zurückgeführt wird und ein Teil als Reinwasser abgeleitet wird.

2. Verfahren nach Anspruch 1, wobei ein Teil des Belebtschlamms in die anaerobe Prozessumgebung rezirkuliert wird, wobei ein Teil des Belebtschlamms in die anoxische Prozessumgebung rezirkuliert wird, wobei ein Teil des Belebtschlamms in den Vorlagebehälter rezirkuliert wird, wobei das Abwasser in einen Vorlagebehälter das Abwasser geleitet wird, wobei der Vorlagebehälter als anaerobes Becken und Teil der biologischen Behandlung eingesetzt wird und/oder das Abwasser in der biologischen Prozessumgebung in Chargen geklärt wird wobei Ammonium NH₄⁺ mit Sauerstoff O₂ und Nitrit NO₂⁻ in der anaeroben und in der anoxischen Prozessumgebung zu Stickstoff N₂ und Nitrat NO₃⁻ in einem Anammoxprozess oxidiert wird.

3. Verfahren nach einem oder mehreren der vorhergehenden Ansprüche, wobei die biologische Behandlung durch eine spezifische Bioaugmentation, insbesondere mittels einer steuerbaren Bioaugmentationsvorrichtung, mit spezifischen, definierten Mikroorganismen unterstützt wird, die im aeroben Tank bei einem Sauerstoffgehalt von ca. 0.5% nitrifizieren, unterstützt wird, die gesteuert in den Prozess in den Vorlagebehälter, in die anaerobe, anoxische Prozessumgebung und(/oder) in die Nachklärvorrichtung zur Nachklärung direkt hinzudosiert wird.

4. Verfahren nach einem oder mehreren der vorhergehenden Ansprüche, wobei Überschussschlamm aus der biologischen Prozessumgebung, aus der Nachklärvorrichtung, insbesondere nach Zirkulieren mit der einstufigen Feststoffabtrennvorrichtung, insbesondere mit einem hohen Anteil an Phosphor entfernt wird.

5. Verfahren nach einem oder mehreren der vorhergehenden Ansprüche, wobei das Abwasser in der biologischen Prozessumgebung kontinuierlich in einem Durchlaufkanal geklärt wird, insbesondere mit einem ersten anoxische Beckenabschnitt und einem zweiten aeroben Beckenabschnitt oder das Abwasser im Behälter intermittierend anoxisch und aerob behandelt wird.

6. Verfahren nach einem der vorhergehenden Ansprüche, wobei Teile von Belebtschlamm und gleiche Teile von Wasser mit Bruchteilen von hochkonzentriertem Abwasser zum Beginn der Klärung sukzessive vermischt werden, und im gleichen Verhältnis Teile von allen vorgenannten drei Teilen in gleichen Zeitabschnitten sukzessive beigemischt und zugeführt werden, und somit das zu klärende Volumen des Abwassers pro Zeitabschnitt sukzessive erhöht wird. Sukzessive mit der richtigen Mischung den Prozess Hochfahren und den Prozess halten

7. Verfahren nach einem der vorhergehenden Ansprüche, wobei eine Balance in der biologischen Prozessumgebung, insbesondere in der anaeroben/anoxischen Prozessumgebung, zwischen einem pH-Wert von 6,0 (leicht sauer) bis 8 (leicht basisch) durch das Zusammenspiel von hochkonzentriertem, stark basischen Abwasser mit sehr hoher Säurekapazität, einem saurem Belebtschlamm und einer sauren, biologischen Prozessumgebung mit einer in der aeroben Prozessumgebung aeroben Steuerung auf Basis des pH-Werts des Abwassers aus der aeroben Prozessumgebung überwacht und aufrecht erhalten wird.

8. Verfahren nach einem der vorhergehenden Ansprüche, wobei Überschussschlamm (11) aus der biologischen aeroben Prozessumgebung (3c) und aus der Nachklärvorrichtung (4), insbesondere aus einer Membranfiltrations-Vorrichtung, der Feststoffabtrennvorrichtung (1) zugeführt wird.

9. Verfahren nach einem der vorhergehenden Ansprüche 1 bis 7, wobei das geklärte Abwasser auf die Qualität der Klärung überprüft wird.

10. System (100) zur biologischen Behandlung von hochkonzentriertem Abwasser (200), insbesondere mit extrem hoher Stickstoff- und Phosphorkonzentration, insbesondere aus landwirtschaftlicher Produktion oder aus anschlussfreien Sanitärkabinen, mit einer Feststoffabtrennvorrichtung (1), mit einer biologischen Prozessumgebung (30) mit mindestens einem Behälter (3a) für eine anaerobe Prozessumgebung, mit mindestens einem Behälter (3b, 3c) für eine Denitrifikation mit einer anoxischen Prozessumgebung und für eine Nitrifikation mit einer aeroben Prozessumgebung, mit Vorrichtungen (235) zum steuerbaren Lufteintrag sowie einer Maschinenvorrichtung umfassend Sensoren (32-37), Steuerungen, Pumpen, Zirkulationsvorrichtungen (31, 32) sowie Versorgungs- und Abführleitungen und einer Nachklärvorrichtung (4), wobei die Behälter sukzessive das Abwasser (200, 210, 220, 230, 231, 232) ableitend hintereinander geschaltet sind, wobei mindestens eine Rezirkulationsleitung (5) für Belebtschlamm von der Nachklärvorrichtung (4) zur biologischen Prozessumgebung (30) ausgebildet ist.

11. System (100) nach dem vorherigen Anspruch 10, wobei eine Rezirkulationsleitung (5) für Belebtschlamm von der Nachklärvorrichtung (4) zum Behälter (3b) der biologischen anoxischen Prozessumgebung (30) ausgebildet ist, wobei eine Rezirkulationsleitung (5,51) für Belebtschlamm von der Nachklärvorrichtung zum Behälter (3a) der biologischen anaeroben Prozessumgebung ausgebildet ist, wobei ein im Leitungsfluss des Abwasser (210, 220) liegender Vorlagebehälter (2) für die Vorlage des zu klärenden hochkonzentrierten Abwassers (200) nach der Feststoffabtrennvorrichtung (1) angeordnet ist, wobei eine Rezirkulationsleitung (6) für Belebtschlamm von der Nachklärvorrichtung (4) zum Vorlagebehälter (2) ausgebildet ist, wobei das System derart ausgebildet ist, so dass ein Verfahren nach einem oder mehreren der vorherigen Ansprüche 1 bis 9 ausführbar ist, wobei die Nachklärvorrichtung (4) als Membran-Belebungs- und Filtrations-MBR-Tank ausgebildet ist.

12. System (100) nach dem vorherigen Anspruch, wobei eine Speicher-Programmierbare-(SPS)-Steuerung mit im aeroben Behälter (3c) angeordneten Sensoren (34-37) zur Online-Messung von pH-Wert, gelöstem Sauerstoffgehalt, Ammonium- und Nitratgehalt und Feststoffkonzentrationsgehalt, mit Füllstandsensoren (41-42) in den Behältern und mit einer im anoxischen Behälter (35) angeordneten Online-Redox-Messvorrichtung (32) zur Messung des Reduktionspotentials verbunden ist, sowie mit Aktoren (233, 234, 43)verbunden ist, die Belebtschlamm aus der biologischen Prozessumgebung über Rezirkulationsleitungen aus der Nachklärvorrichtung (4) in den aeroben und /oder in den anoxischen Behälter (3c, 3b) und/oder in den Vorlagebehälter (2) pumpen, die Gebläsevorrichtungen (235) mit Luftdiffusoren im aeroben Behälter (3c) ansteuern, die mit Umwälzvorrichtungen das Abwasser in den Behältern bewegen und die mit Pumpen das Abwasser durch die einzelnen Behälter (3a, 3b, 3c) im Fluss fortleiten.

13. System nach einem der Ansprüche 10 bis 12, wobei Behälter (3a, 3b, 3c) zur biologischen Prozessumgebung (30) zylindrisch ausgebildet sind, wobei ein Behälter (3a) für die anaerobe Prozessumgebung zentriert ausgebildet ist und dazu konzentrisch ringförmig Behälter für eine anoxische Prozessumgebung (3b) und eine aerobe Prozessumgebung (3a) ausgebildet sind, wobei der Behälter (3a-c) aus Beton mit einem Deckel (38) aus Beton ausgebildet ist, wobei der Boden (34) der Behälter jeweils zu einem Auslass geneigt ausgebildet ist, wobei der Deckel (38) Öffnungen (31) zur Reinigung aufweist, wobei mindestens ein quaderförmiger Container mit Vorrichtungen zur Steuerung und Vor- und Nachklärung angeordnet ist.

14. Computerprogrammprodukt, das in einen Speicher einer SPS-Steuerung der Vorrichtung (100) nach dem vorherigen Anspruch 12 ladbar ist und mit dem ein Verfahren nach dem Anspruch 7 ausführbar ist.

15. Verwendung von Feststoff (12) als Wirtschaftsdünger, der gemäß eines Verfahrens nach einem der Ansprüche 1 bis 9, in einer einstufigen Feststoffabtrennvorrichtung (1) ausgeschieden wird.
